# EUROPÄISCHE PATENTANMELDUNG

(11) **EP 4 656 565 A2**
(43) Veröffentlichungstag der Anmeldung: **03.12.2025**
(21) Anmeldenummer: 25178273.6
(22) Anmeldetag: 22.05.2025
(51) Int. Cl.: B65G 59/06, B65H 3/24, B65H 3/52

(54) **VORRICHTUNG UND VERFAHREN ZUR ENTSTAPELUNG UND SORTIERUNG VON BUCHBLOCKS**

(30) Priorität: 27.05.2024 DE 102024114834
(71) Anmelder: Müller Martini Holding AG, 6052 Hergiswil (CH)
(72) Erfinder: Thalmann, Mike, 6210 Sursee (CH)

(57) **Zusammenfassung**

Die Erfindung betrifft eine Vorrichtung zur Vereinzelung von zu einem Stapel zusammengefassten Druckprodukten, wie Bücher, Buchblocks, Broschüren, wobei die Vorrichtung mindestens ein durch einen Antrieb betreibbares Fördermittel für den Transport des Stapels aufweist, wobei das Fördermittel mit mindestens einem zustellbaren Element in Wirkverbindung steht, durch dessen Einsatz eine dem Takt entsprechende Vereinzelung der zum Stapel gehörenden Druckprodukte umsetzbar ist. Die Druckprodukte im Aufnahmesupport (251a) in eine Schieflage überbracht werden, welche zu einer Reduzierung der Belastung auf die zu entstapelnden Druckprodukte führt, dass zum Aufnahmesupport (251a) gehörende Rückhalter (273) und Stütze (272) mit einen Freiheitsraum gegenüber der vorgegebenen Druckproduktdicke eingestellt werden, dass ein Losbrechen der verbundmässig erfassten Druckprodukte durch den Einsatz von zum Aufnahmesupport gehörenden Servo-Achse (271) und Rüttler (274) maximiert werden, dass durch die Separierung des Druckprodukts von der Servo-Achse (271) lässt sich diese (271) bei Bedarf zurückfahren, dergestalt, dass ein bereits vorgefahrenes Druckprodukt erkannt und gleich an der Stelle abgeholt wird, und dass die Einbringung der Druckprodukte in den Aufnahmesupport und der anschliessende Entstapelungsprozess voneinander separat betrieben werden.

## Beschreibung

### Technisches Gebiet

In der heutigen Buchproduktion werden die Bestellung von Büchern unterschiedlicher Konfektionierung immer mehr ab unmittelbarem Bedarf abgerufen, wodurch die Produktionsanlagen und Maschinen einen hohen Stand an Digitalisierung aufweisen müssen, will man diese Beistellung unter wirtschaftlichen Aspekten umsetzen können, d.h., die Anlagen und Maschinen müssen in der Lage sein, die eindigitalisierten Aufträge für Klein- und Kleinstauflagen und «Book of One» unmittelbar und wirtschaftlich umzusetzen, womit die Anlagen und Maschinen so betrieben werden müssen, dass sie in der Lage sind, vollautomatisch, also ohne Handeingriffe, die einfliessenden Produktionsbefehle unmittelbar umzusetzen.

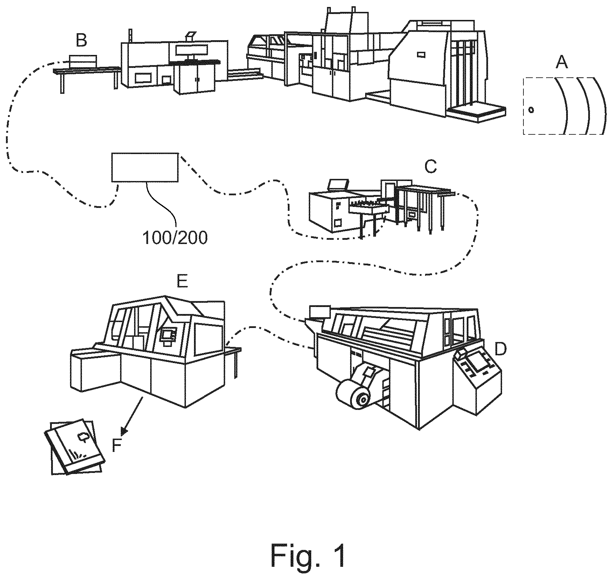

Um das technische Gebiet näher abzustecken, wird auf Figur 1 dieser Anmeldung verwiesen: Zugrunde liegt eine mögliche Folge von Anlagen und Maschinen für die Produktion von Buchblocks, welche verschiedene Ausgestaltungen aufweisen können. Die Konfiguration beginnt mit der Darstellung einer bedruckten Papierbahn (A), welche die papierene Ausgangslage bei der Produktion von Buchblocks bildet.

Auf die Bereitstellung der Papierbahn (A) folgt eine Produktionsanlage (B), welche hier als Beispiel durch eine Hochleistungsanlage (Sigmaline) aus dem Hause der Anmelderin dargestellt ist, womit die Grundlage für einen hocheffizienten Ausstoss sichergestellt ist. Es liegt auf der Hand, dass ein solcher Ausstoss durch nachgeschaltete Vorkehrungen aufgefangen werden muss. Zum einen werden die Buchblocks fortlaufend zu gestapelten Einheiten zusammengeführt, zum anderen greift dann im Nachgang eine Entstapelungsvorrichtung 100, 200, ..., ein, welche dafür sorgt, dass die Weiterverarbeitung der Buchblocks über die verschiedenen nachgeschalteten Maschinen, beispielsweise Vorsatzbogenanleger C, Klebebinder D, Dreischneider E takteinhaltend gewährleistet ist. Der Dreischneider E sorgt in letzter Instanz für eine Schlusskonfektionierung der vom Klebebinder bereitgestellten Buchblocks F, unabhängig ihrer Dicken und Grössen. Effizient lässt sich der hohe Durchlauf über die vorgenannte Produktionsanlage B nur dann aufrechterhalten, wenn die Reihenfolge der Stapelung die strenge Vorgabe für die individuelle weitere Bearbeitung der Buchblocks bildet, d.h., die Entstapelungsvorrichtung 100, 200, ..., muss so aufgebaut sein, dass die vorgegebene Reihenfolge der Buchblocks im Stapel, beginnend von unten, aufrechterhalten wird, d.h. die Entstapelung muss demnach immer jeweils der unterste Buchblock zuerst aus dem Stapel ausgefördert werden, unter fortlaufender Einhaltung des zugrundeliegenden Bearbeitungstakts bei den folgenden Stationen (C, D, E) und unter Berücksichtigung der unterschiedlichen Dimensionen der zu verarbeitenden Buchblocks.

### Stand der Technik

Aus EP 1 801 050 A1 geht eine Vorrichtung zum Entstapeln von Büchern, Broschuren, Buchblocks oder dgl. quaderförmigen Druckprodukten (2) hervor, mit einem durch einem regelbaren Antrieb betriebenen Vereinzelungsband (6), zum taktweisen Vereinzeln des jeweils untersten Druckprodukts (2a) aus dem Stapel (3a), mit auf Format einstellbaren, den Stapel (3a) auf dem Vereinzelungsband (6) positionierenden Seitenbegrenzungen (8a, b), mit einem höheneinstellbaren, einen Durchlass für das jeweils zu vereinzelnde Druckprodukt (2a) bildenden Rückhalteelement (9), mit einer Auflage (10) im Einlaufbereich des Vereinzelungsbands (6), zum Abstützen der Hinterkante des zweituntersten Druckprodukts (2) beim Vereinzeln des untersten Druckprodukts (2 a), und mit einem dem Vereinzelungsband (6) vorgeordneten Zuführband (5), zum Nachführen eines Folgestapels (3b) in die Vereinzelungsposition.

Zur zuverlässigen und einwandfreien Vereinzelung von insbesondere dicken, kleinformatigen Buchblocks aus hohen Stapeln weist diese Entstapelungsvorrichtung (1) wenigstens ein in einem definierten Abstand hinter dem Stapel (3a) angeordnetes Abstützungselement (15a, b) auf, welches beim Nachführen eines Folgestapels (3b) aus dem Förderweg bewegbar ist. Das Abstützungselement (15a, b) bewegt sich beim Nachführen eines Folgestapels (3b) selbsttätig auf dem Förderweg.

Der Buchblockstapel befindet sich auf dem Transportband, der Niederhalter sowie der Rückhalter werden zugestellt, also in Position gebracht (Schritt 1). Das Transportband zieht das unterste Produkt aus dem Stapel raus (Schritt 2), worauf der Stapel auf das Transportband fällt (Schritt 3). Darauf wird der Rückhalter auf die nächste Produktdicke eingestellt, womit das nächste Produkt entstapelt wird (Schritt 4). Der Zyklus wiederholt sich, bis der Stapel komplett entstapelt ist.

Sind die erforderlichen Produktionstakte zur fortwährenden Speisung einer nachgeschalteten Hochleistungsmaschine zur Teil- oder Fertigbearbeitung der Produkte, stösst die gewürdigte Entstapelungsvorrichtung an ihre Grenzen, welche systembedingt mit dem Rückhalteelement (9) im Zusammenhang steht.

Dies hängt damit zusammen, dass nachdem das erste Produkt separiert wurde (Schritt 3) der Rückhalter nicht genügend Zeit hat sich auf die nächste Dicke einzustellen, da das Transportband bestimmungsgemäss im Dauerbetrieb läuft. Aus kinematischen Gründen besteht bei dieser Konstellation die immanente Gefahr, dass dann zwei Produkte entstapelt werden, was für die Weiterverarbeitung nicht brauchbar ist. Unter Ausschöpfung aller kinematischen Möglichkeiten lässt sich indessen feststellen, dass diese Entstapelungsvorrichtung ohne Weiteres für einen Einsatz mit Buchblocks vorsehen lässt, die immer die gleiche Produktdicke aufweisen, allenfalls auch einsetzbar ist, wenn sich die Produktdicken im Verlauf der Entstapelung stetig vergrössert. Das Bedürfnis ist heutzutage aber darauf angelegt, eine Entstapelung von fortlaufend dickenvariablen Buchblocks sicherzustellen.

Aus dem allgemeinen Stand der Technik ist des Weiteren eine Entstapelungsanlage bekanntgeworden, bei welcher in einem dynamisierten Verfahren die Buchblocks auf einem quer zur Produktionsrichtung angeordneten Schwenktisch in eine Schieflage versetzt werden. Dieser Schwenktisch weist eine Anzahl Noppen auf, durch welche der untere Buchblock von der Stapelung durch Druck/Reibung gehalten wird, und der obere Buchblock durch die sich durch eine implementierte Bewegung einstellende Schwerkraft runterfällt. Vom Aufbau her ist diese Entstapelung auf die Separierung (auch Vereinzelung genannt) von zwei Buchblocks ausgelegt, wobei durch die zugrunde liegende Halterung durch Noppen lassen sich dünne Produkte nicht sicher entstapeln.

Aus dem allgemeinen Stand der Technik ist eine weitere Entstapelungsanlage bekanntgeworden, bei welcher das untere Druckprodukt (Buchblock) in Wirkverbindung mit einer Vakuumplatte sowie einem auf der Rückseite angeordneten Schieber in Produktionsrichtung bewegt wird. Ein Rückhalter sorgt dafür, dass die darüberliegenden Produkte nicht mitvereinzelt werden. Der Buchblock wird anschliessend durch eine Transportrolle auf ein nachfolgendes Transportband gefördert. Durch diese Konfiguration hat sich gezeigt, dass das gesamte Stapelgewicht durch die horizontale vorgegebene Lage auf das zu separierende Druckprodukt wirkt. Dies setzt dann voraus, dass, um ein Durchrutschen dünner Produkte zu verhindern, der dort vorgesehene Rückhalter sehr genau eingestellt werden muss, was bei einem Betrieb von «Book of One» sehr schwierig zu bewerkstelligen ist, da die exakte Dicke nicht bekannt ist.

Auch hinsichtlich der Ausgestaltung der Transportrollen muss streng darauf geachtet werden, dass diese eine allseits genaue Einstellung resp. Zustellung erfahren, denn durch eine nicht genaue oder erfassungsschwache Positionierung lässt sich keine nachhaltige Separierung des Produkts gewährleisten. Andererseits darf die Einstellung resp. Zustellung der Transportrollen auch nicht zu stark eingestellt werden, weil sich dies dann auf die Rollenbewegung der Druckprodukte negativ auswirkt. Die optimale Einhaltung dieser Bedingungen ist an sich schwer zu bewerkstelligen, denn die saubere Separierung unterschiedlich dicker Druckprodukte hängt davon sehr stark ab, ob diese im Verlaufe dieser Vereinzelung die Tendenz entfalten, nach vorne zu rutschen, und so die Funktion des Rückhalteelements durch eine aufkommende Klemmwirkung ausser Kraft setzt.

Ausgehend von diesem erläuterten Stand der Technik erscheint die Druckschrift EP 1 801 050 A1 den nächstliegenden Stand der Technik zu bilden.

### Darstellung der Erfindung

Hiergegen will die Erfindung Abhilfe schaffen. Der Erfindung, wie sie in den Ansprüchen gekennzeichnet ist, liegt die Aufgabe zugrunde, eine Vorrichtung und ein Verfahren zu deren Betrieb vorzuschlagen, durch welche bei maximierten Taktzahlen und unabhängig der jeweils angelieferten Dicken und Dimensionen der einzelnen Druckprodukte (bisweilen im folgenden auch Buchblocks genannt) eine gesicherte Weiterbeförderung gewährleistet ist, sei es, dass mehrere Druckprodukte gestapelt angeliefert werden, sei es, dass die Druckprodukte intermittierend auch vereinzelt angeliefert werden können, in beiden Fällen soll die strukturierte Vereinzelung und Weiterbeförderung durch dieselbe Vorrichtung gewährleistet werden.

Dabei werden erfindungsgemäss zwei grundsätzliche Konzeptausführungen unter Schutz gestellt, bei welchen eine gestapelte Lage der Druckprodukte zugrunde liegt, wobei in der Regel werden diese angesprochenen Konzepte individuell eingesetzt und es liegt offenkundig auf der Hand, dass diese Konzepte betreffend Anlieferung eine gemeinsame technische Grundlage aufweisen. Sie können auch nach Bedarf subsequent oder parallel zueinander geschaltet werden, oder sogar untereinander einen gewissen Austausch relevanter Elemente vollziehen, sonach ausser Zweifel steht, dass die Erfordernisse an die Einheitlichkeit bei beiden Konzepten voll erfüllt sind, überdies bilden diese Konzepte eine echte Bereicherung im Stande der Technik.

Die hier fokussierten Konzepte haben zudem den Vorteil, dass deren Betrieb nicht nur bei gestapelten Druckprodukten funktioniert, sondern sie sind auch fortlaufend in der Lage, jene Produktionsvorgänge aufzufangen, bei welchen intermediär einzelne Druckprodukte angeliefert werden, womit die Flexibilität der Konzepte maximiert gesteigert werden kann.

Die Funktionsweise eines ersten Konzeptes besteht darin, dass der Stapel aus Druckprodukten anfänglich durch ein Transportband auf einen Schwenktisch (Schritt 1-2) befördert wird, dabei detektiert eine Lichtschranke den Beginn und das Ende des Stapels. Durch die definierte und somit bekannte Geschwindigkeit des Transportbandes lässt sich die Stapelbreite ermitteln. Sodann, auf Grund der Information über diese Breite kann die Formateistellung durch die unmittelbare Zustellung eines Schiebers beginnen. Bei dem nun folgenden Ablauf (Schritt 3) fährt der Schieber rückseitig des Stapels nach oben. Damit lässt sich dieser durch ebendiesen Schieber entlang des Schwenktisches in Förderrichtung nach vorne fördern, dies bis zu einer Vakuumposition, welche endseitig des Schwenktisches angeordnet ist (Schritt 4), wobei bei dieser Vakuumposition wird das unterste Produkt im Stapel durch die dort wirkende Saugkraft am Ort festgehalten, so dass der Schwenktisch nunmehr seine implementierte Neigung einnehmen kann. Gleichzeitig ist es auch so, dass der ganze Stapel durch einen rückseitig wirkenden in vertikaler Richtung ausgefahrenen Schieber in dieser Position stabil gehalten wird. Aus dieser Position heraus erfolgt dann die nächste operationelle Umsetzung, indem der genannte Schieber rückwärtsgefahren wird, wodurch der restliche Stapel geordnet auf die schiefe Ebene (Schritt 5) zurückbegleitend wird. Die Abstützung des Stapels durch den in Transportrichtung bewegbaren Schieber ist vorteilhaft immer vorzusehen, um eine geordnete Lage des Reststapels zu gewährleisten. Danebst greift bei dieser Konstellation nach Schritt 5 noch eine von unten intermittierend betreibbare Lasche ein, welche auf das bereitstehende Druckprodukt für den Weitertransport gerichtet ist, insoweit, dass durch diese Lasche sichergestellt wird, dass insbesondere dicke und schwere Druckprodukte unmittelbar nach dem Separierungsprozess nicht auseinanderfallen können. Damit liegt der verbleibende Stapel durch das von der Vakuumwirkung kraftschlüssig gehaltene Druckprodukt separiert vor, womit dieser verschiebungsautonom zur Verfügung steht. Zwischen den beiden Gebilden wird ein Stössel nach oben gefahren (Schritt 6) und gleichzeitig wird das Vakuum auf das unterste Druckprodukt aufgehoben. Damit liegt gegenüber diesem eine positionsstabile und gleichzeitig förderungstaugliche Konstellation vor, so dass es nun möglich ist, dass der Schieber den Stapel erneut wieder zur Vakuum Position vorschieben kann, gleichzeitig wird dabei das unterste Druckprodukt weiterbefördert (Schritt 7), womit der verbleibende Stapel für die nächste Entstapelung (Schritte 1-7) bereitsteht. Eine Lichtschranke beim Schieber erkennt, ob noch Druckprodukte im Stapel vorhanden sind, und nach fertiggestellter Entstapelung folgt eine neue Zuführung von gestapelten Druckprodukten nach.

Die Vorteile dieses ersten Konzeptes sind darin zu sehen, dass:
a) Keine mechanischen Einstellungen bezüglich der Dicke der Druckprodukte vorgenommen werden müssen, demnach lässt sich mit einem Stapel, mit komplett dickenvariablen Druckprodukten arbeiten (Book of One).
b) Es müssen keine vorgängigen Informationen über die Zusammensetzung des Stapels betreffend Anzahl Produkte, Produktdicke, Format, beschafft werden.
c) Durch die Schieflage wird die Belastung auf die zu entstapelnden Druckprodukte reduziert, was zu einem erheblichen Vorteil beim Entstapelungsprozess selbst führt.

Für die Erfassung unterschiedlicher Formate der Druckprodukte wird der Schwenktisch entsprechend dem vorangehenden ersten Konzept so ausgelegt, dass der eingeschleuste Stapel maximiert ohne Widerstand von der Zubringerstruktur auf den Schwenktisch gleiten kann. Dieser ist so ausgelegt, dass die Druckprodukte durchgeschleust werden können. Zwischen einem Minimalformat (Blockhöhe 120 mm/Blockbreite 100mm) und einem Maximalformat (Blockhöhe 380 mm/Blockbreite 330 mm) können Druckprodukte durchgeschleust werden. Sowohl die zum Schwenktisch gehörenden Hilfselemente als auch die endseitig positionierte Platte zur Erzeugung der auf das Druckprodukt ausübenden Vakuumkraft vermögen mindestens die aufgelisteten Minimal-/Maximalformat zu erfassen, und darüber hinaus weist dieses Schwenktisches immer noch operative Reserve auf, welche die Formate weiter zu minimieren resp. maximieren vermögen, wobei bei diesem Schwenktisch darüber hinaus Druckproduktdicken mindestens zwischen 1.5 und 65 mm erfasst werden können. Bei einer konventionellen Taktleistung über alle Dimensionierungen der Druckprodukte lassen sich Produktionen von mindestens 4'000 Einheiten pro Stunde erzielen. Selbst bei einem Betrieb von "Book of One", d.h., jedes Druckprodukt weist hier eine eigene Dimensionierung und Ausgestaltung auf, lassen sich Taktleistungen von mindestens 2'000 Einheiten pro Stunde erzielen, sonach geht aus diesen Zahlen recht deutlich hervor, dass die erfindungsgemässe Entstapelung in den einzelnen hier dargelegten Konzepten eine wesentliche Bereicherung im Stande der Technik bildet.

Ein weiteres erfindungsgemässes Konzept einer Entstapelung von durch Druckprodukte gebildeten Stapeln, welche Einrichtung insbesondere bei höheren Taktzahlen zum Einsatz kommt, sei es als autonome Einrichtung, sei es in Verbindung mit der Entstapelung des voran dargelegten Konzeptes, wobei es sich ohne Weiteres vorstellen lässt, die Entstapelung nach dem ersten Konzept für eine Produktion von «Book of one» heranzuziehen, die übrige Produktion dann durch den zweiten Konzept zu betreiben, wobei bei letzterer dann grössere Lose durchgehend produziert werden könnten. Diese kombinierte Betriebsweise ist immer dann in Betracht zu ziehen, wenn die Konzepte parallel vorliegen, und wenn dann der «Book of One»-Anfall zwar intermittierend erfolgt, aber doch bei hoher Kadenz stattfindet.

Die Entstapelung nach diesem zweiten Konzept wird durch folgende Schritte betrieben:

Der Stapel wird auf das Eintaktband gefördert, das dem Transportband der Entstapelung nach dem ersten Konzept entspricht. Dieser Stapel wird zunächst auf einer Zwischenplattform deponiert, und steht dann für den weiteren Transport zur Verfügung. So ist es beim Vorsehen einer solchen Zwischenstufe möglich, dass die Stapel auf Transportband angehalten werden können, falls die Entstapelung nach dem zweiten Konzept die Zuflüsse der Druckprodukte nicht schlucken könnte.

Nun folgt die Übergabe des Stapels an einen Portal-Transporteur, welches in Position gegenüber einer Übernahmevorrichtung gefahren wird, welche in eine Position für die optimale Übernahme des Stapels übergeht. Auch hier wird eine nicht näher gezeigte Lichtschranke aktiv, welche die Stapelbreite resp. die Breite der Druckprodukte detektiert. Dabei ist diese Übernahmevorrichtung kinematisch so aufgebaut, dass ein bewegliches direkt wirkendes Aufnahmeelement derselben Übernahmevorrichtung Richtung Portal-Transporteur hochfahren kann (Stapellift), sich für die Übernahme ausrichtet und dort, entsprechend, den angelieferten Stapel übernimmt. Im Durchlaufbetrieb ist es aus takteinhaltenden Gründen auch möglich, dass die Stapel oder allgemein die Druckprodukte jeweils direkt über den Portal-Transporteur an das Aufnahmeelement, das die Funktion eines Stapelliftes erfüllt, herangeführt werden. wie dies im weiteren Verlauf näher dargestellt ist.

Beim weiteren Verlauf wird die unmittelbare Übergabe des durch den Portal-Transporteur herangeschafften Stapels erfasst, wobei diese Übergabe unter Berücksichtigung der Relativbewegung zwischen Überbringer und Übernehmer abgestimmt werden muss, wobei eine wesentliche Übernahmehilfe darin besteht, dass das hochgefahrene Aufnahmeelement mit einer seitlichen Führungs- und Stabilisierungswand bestückt ist, über welche der Stapel gleitend in das Aufnahmeelement geführt werden kann. Die weitere Bestückung der Übernahmevorrichtung, mit dem von dem Aufnahmeelement erfassten Stapel, erfolgt erst dann, wenn die vorhereingebrachten Buckblocks einzeln weitergeleitet worden sind.

Eine intermediäre Ausgangslage erfolgt durch eine direkte Übernahme von dem Portal-Transporteur. Der Stapellift bringt den Stapel durch eine Linearbewegung sowie Rotation vom Magazin in die Separierungsposition der Übernahmevorrichtung, so dass der Separierungsprozess nun gestartet werden kann, indem der Stapellift zwecks Übernahme des Stapels nach oben fährt, so dass der nächste Stapel direkt beim Portal-Transporteur abgeholt werden kann. Eine Mitnehmerfingerkette bringt das separierte Produkt zwecks Beförderung in eine horizontale oder quasi-horizontale Lage. Während der beschriebenen Vereinzelung (Entstapelung) des Stapels wird dieser in eine Separierungsposition überführt, wobei der zuvor separierte Druckprodukt durch den Einsatz der bereits erwähnten Mitnehmerfingerkette auf das Übergabeband gefördert wird, wo es anschliessend den nachfolgenden Transportbändern übergeben werden kann.

Die Vorteile dieses zweiten Konzeptes sind darin zu sehen, dass:
a) Durch die Schieflage wird die Belastung auf das zu entstapelnden Druckprodukt reduziert, was einen erheblichen Vorteil für den Separierungsprozess bildet.
b) Der Rückhalter sowie die Stütze müssen somit nicht exakt auf die Produktdicke eingestellt werden.
c) Die Separierung mit einer Servo-Achse ermöglicht eine grosse Flexibilität des Systems. Dieses ermöglicht ein Losrütteln bzw. zweifaches Losbrechen der Druckprodukte im Verbund zu bewerkstelligen.
d) Da das Druckprodukt komplett von der Servo-Achse separiert wird, kann z.B. auch beim Rückwärtsfahren der Achse ein zuvor bereits vorgefahrenes Produkt erkannt und gleich an dieser Stelle abgeholt werden.
e) Der Infeed und die Vereinzelung sind voneinander entkoppelt. Ein neuer Stapel kann während der Vereinzelung herangeführt werden, was sich positiv auf die Output-Leistung auswirkt

Zusammenfassend geht es erfindungsgemäss demnach um ein erstes Konzept, welches eine Vorrichtung und ein Verfahren zur Vereinzelung von zu einem Stapel zusammengefassten Druckprodukten, wie Bücher, Buchblocks, Broschüren zum Inhalt hat, und durch einen Antrieb betreibbares Fördermittel für den Transport des Stapels versehen ist, wobei das Fördermittel mit mindestens einem zustellbaren Element bestückt ist, durch dessen Einsatz eine dem Takt entsprechende Vereinzelung der zum Stapel gehörenden Druckprodukte umgesetzt wird. Beim Transport des Stapels in Transportrichtung entlang des Fördermittels wird durch mindestens einen Sensor die Breite dieses Stapels oder des einzelnen Druckprodukts detektiert, wobei in Abhängigkeit dieser Stapelbreite wird ein erstes Element zugestellt, welches der Unterstützung und/oder Führung des Stapels in Transportrichtung dient. Der Stapel wird entlang des Fördermittels bis zu einer endseitig angeordneten Position geführt, in welcher eine Ansaugkraft auf das unterste Druckprodukt im Stapel ausgeübt wird. Bei dieser Position wird das Fördermittel in eine vertikal gerichtete Neigung überführt, wobei nach vollzogener Neigung das erste Element unter Einbindung des Reststapels rückwärts gefahren wird, bis das unterste durch Ansaugkraft fixierte Druckprodukt frei aufliegt, Dieses Druckprodukt wird dann durch eine intermittierend betreibbare Lasche abgestützt, welche das Druckprodukt unter gleichzeitiger Ausschaltung der Ansaugkraft weitertransportiert wird, wobei die nachfolgenden Druckprodukte des Stapels in gleicher Manier separiert und weitertransportiert werden. Die intermittierend betreibbare Lasche ist auf das für den Weitertransport separierte Druckprodukt ausgerichtet, wobei die eingefahrene Lasche dazu dient, dicke und schwere Druckprodukte vor einem Auseinanderfallen zu bewahren.

Des Weiteren, ebenfalls immer im Sinne einer Zusammenfassung des zweiten Konzeptes, wird die Vorrichtung und das Verfahren zur Vereinzelung von zu einem Stapel zusammengefassten Druckprodukten, wie Bücher, Buchblocks, Broschüren, mit mindestens einer Transporteinrichtung und einer Entstapelungsvorrichtung ausgestattet, in welcher die taktgemässe Vereinzelung der Druckprodukte durchgeführt wird, wobei eine Transporteinrichtung für die Übernahme eines von einem Transportband beigestellten Stapels ausgelegt ist, und die Transporteinrichtung den Stapel bis auf Höhe einer darunter angeordneten Entstapelungsvorrichtung führt. Eine Lichtschranke im Bereich der Transporteinrichtung detektiert die Stapelbreite und/oder die Breite der einzelnen Druckprodukte und leitet diese Informationen an die Entstapelungsvorrichtung weiter. Ein zur Entstapelungsvorrichtung gehörender Aufnahmesupport bewegt sich von einer Betriebsposition nach oben auf die Transporteinrichtung zu, bis jene Stelle erreicht ist, bei welcher eine Übergabe des Stapels von der Entstapelungsvorrichtung zum Aufnahmesupport stattfindet. Der Aufnahmesupport mit dem übernommenen Stapel fährt wieder an seine Betriebsposition zurück, in welcher der Entstapelungsvorgang dann eingeleitet wird. Zwischenzeitlich fährt die Transporteinrichtung zu ihrer Ausgangsposition zur Übernahme eines nachgelieferten Stapels zurück. Bei dieser Betriebsposition greift mindestens eine krafterzeugende Rückhalterung ein, welche auf kopf- oder fussseitig oder auf mindestens ein Druckprodukt oberhalb des untersten Druckprodukts eine Haltekraft umsetzt. Das unterste Druckprodukt wird von einem unterhalb des Aufnahmesupports betriebenen Förderband erfasst und unter Zuhilfenahme eines Mitnehmerfingers als Teil einer Mitnehmerfingerkette weitertransportiert. Die restlichen Druckprodukte werden sukzessiv von der Rückhalterung frei gegeben und sie werden dann einzeln in selber Manier weiterbefördert.

Ferner, immer noch im Sinne einer Zusammenfassung eines nunmehr erweiterten zweiten Konzeptes, wird die Vorrichtung und das Verfahren zur Vereinzelung von zu einem Stapel zusammengefassten Druckprodukten, wie Bücher, Buchblocks, Broschüren, mit mindestens einer Transporteinrichtung und einer Entstapelungsvorrichtung ausgestattet, in welcher die taktgemässe Vereinzelung der Druckprodukte durchgeführt wird. Eine Transporteinrichtung ist für die Übernahme eines von einem Transportband beigestellten Stapels ausgelegt, und die Transporteinrichtung führt den Stapel bis auf Höhe einer darunter angeordneten Entstapelungsvorrichtung. Eine Lichtschranke im Bereich der Transporteinrichtung detektiert die Stapelbreite und/oder die Breite der einzelnen Druckprodukte und leitet diese Informationen an die Entstapelungsvorrichtung weiter. Ein zur Entstapelungsvorrichtung gehörender Aufnahmesupport bewegt sich von einer Betriebsposition nach oben auf die Transporteinrichtung zu, bis jene Stelle erreicht ist, bei welcher eine Übergabe des Stapels von der Entstapelungsvorrichtung zum Aufnahmesupport durchgeführt werden kann. Der Aufnahmesupport mit dem übernommenen Stapel fährt wieder an seine Betriebsposition zurück, in welcher der Entstapelungsvorgang eingeleitet wird. Zwischenzeitlich fährt die Transporteinrichtung zu ihrer Ausgangsposition zur Übernahme eines nachgelieferten Stapels zurück. Bei dieser Betriebsposition greift mindestens eine kraftabgestützte Rückhalterung ein, welche eine jeweils auf das unterste Druckprodukt ausübende Vakuumkraft wirkt, welche bei Weiterförderung dieses Druckprodukts kurzfristig ausschaltbar ist, um beim nächsten nachgerückten Druckprodukt temporär wieder eingeschaltet wird. Das unterste Druckprodukt wird jeweils nach seiner Entstapelung einem weiteren Förderband direkt übergeben, wobei dieses Förderband in Wirkverbindung mit einer auf das Druckprodukt wirkenden Mitnehmerfingerkette steht, und wobei die beiden autonom betrieben werden, so dass die Mitnehmerfingerkette dadurch die taktgemässe Weiterbeförderung der Druckprodukte gewährleisten kann. Die restlichen Druckprodukte werden sukzessiv von der Rückhalterung frei gegeben und sie werden einzeln in selber Manier weitertransportiert.

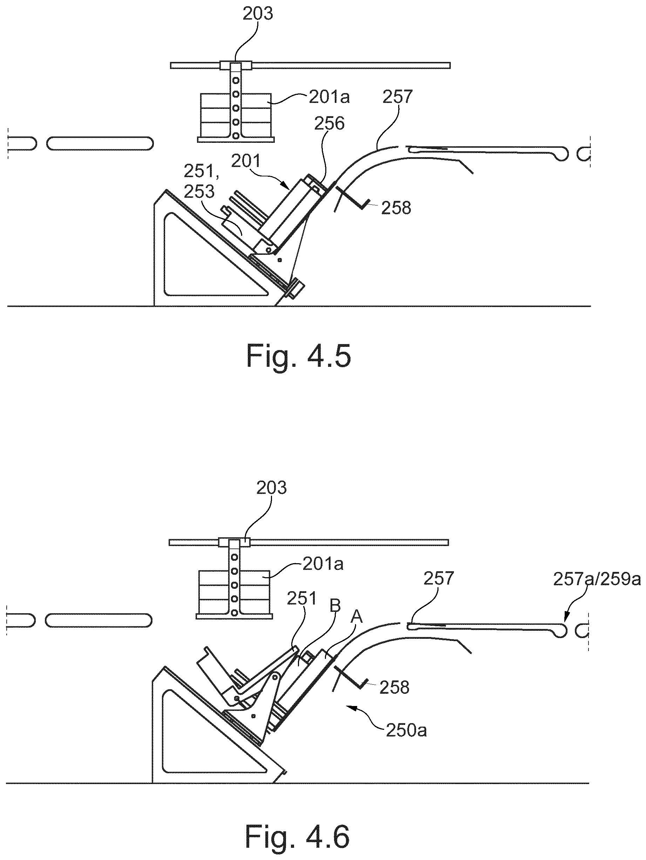

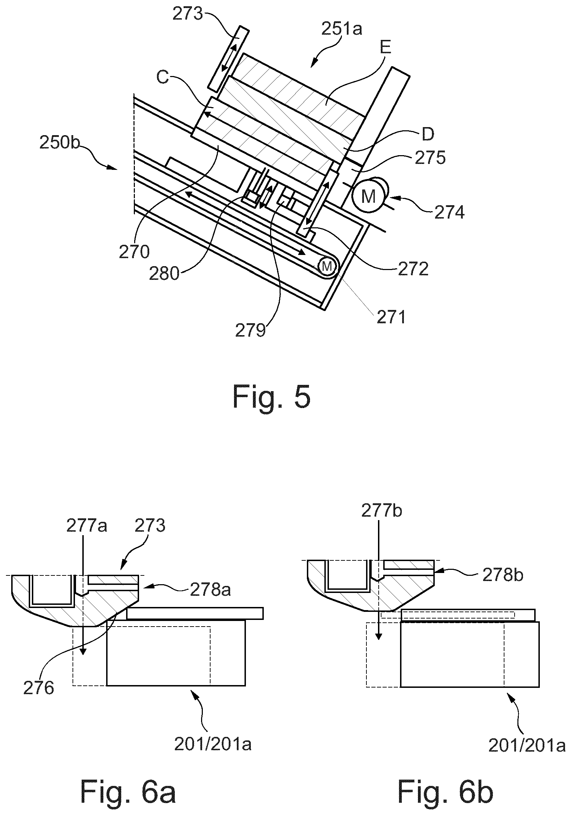

Grundsätzlich ist es so, dass sich die Entstapelungsvorrichtung nach dem zweiten Konzept auf zwei Arten (Konzept 2 und Konzept 2 erweitert) betreiben lässt:
Betreffend die Figuren 4.5 und 4.6 wird die Entstapelungsvorrichtung durch einen Entstapelungsvorgang abgewickelt, der darauf basiert, dass dieser gewichtig von einem vorzugsweise mechanisch betreibbaren Rückhalter geleitet wird, d.h., die Vereinzelung und Weitertransport des jeweils untersten Druckprodukts wird während dieser Phase lediglich durch den Einsatz ebendieses Rückhalters sichergestellt, indem dieser gegenüber den oberen Druckprodukten dagegenhält. Das unterste Druckprodukt wird sonst durch keine weiteren Vorkehrungen gehemmt.
Anders wird die Entstapelungsvorrichtung betrieben, wenn der Entstapelungsvorgang nach den Figuren 5, 6a, 6b, auf welche hier zur Vermeidung unnötiger Wiederholungen verwiesen wird, abgewickelt wird, wobei dieses erfindungsgemässe Konzept (Konzept 2 erweitert) schlichtweg im Vordergrunde stet, wenn es darum geht, eine Produktion mit hohen Taktzahlen bei rasch wechselnden Dimensionierungen, Dicken und Aufmachungen der Buchblocks zu gewährleisten.

### Kurze Beschreibung der Figuren

Nachstehend wird die Erfindung unter Bezugnahme der Zeichnung näher erläutert. Alle für das unmittelbare Verständnis der Erfindung nicht wesentlichen Elemente sind weggelassen worden. Gleiche Elemente sind in den verschiedenen Figuren mit den gleichen Bezugszeichen versehen. In der nachstehend beschriebenen Zeichnung zeigen:
- Figur 1: zeigt zum besseren Verständnis der Erfindung eine mögliche Folge von Anlagen und Maschinen, in welche Die Entstapelungsvorrichtung integriert ist;
- Figur 2: die Ausführung eines ersten Konzeptes einer solchen Entstapelungsvorrichtung;
- Figur 3: die Konfiguration der Hilfselemente zur Entstapelungsvorrichtung nach Figur 2 für das Auffangen verschiedener Dimensionen der Buchblocks;
- Figuren 4.1.-4.10: Eine Abfolge der einzelnen Verfahrensschritte zum Betrieb einer Entstapelungsvorrichtung nach einem zweiten Konzept;
- Figur 5: eine Entstapelungsvorrichtung nach einem zweiten erweiterten Konzept;
- Fig 6a, 6b: Ausbildung eines zentralen Elements für eine gesicherte Entstapelung von Buchblocks, welche durch verschiedene Ausführungen charakterisiert sind.

### Ausführungsbeispiele der Erfindung

Figur 1 zeigt zum besseren Verständnis das Umfeld vorliegender Erfindung in Form einer möglichen Folge von Anlagen und Maschinen für die Produktion von Buchblocks verschiedener Ausgestaltungen. Die Konfiguration beginnt mit der Darstellung einer bedruckten Papierbahn A, welche die papierene Ausgangslage bei der Produktion von Buchblocks bildet. Auf die Bereitstellung der Papierbahn A folgt eine Produktionsanlage B, welche hier als Beispiel durch eine Hochleistungsanlage (Sigmaline) aus dem Hause der Anmelderin dargestellt ist, womit die Grundlage für einen hocheffizienten Ausstoss sichergestellt ist. Es liegt auf der Hand, dass dieser Ausstoss durch nachgeschaltete Vorkehrungen aufgefangen werden muss. Zum einen werden die Buchblocks fortlaufend zu gestapelten Einheiten zusammengeführt, zum anderen greift dann im Nachgang eine Entstapelungsvorrichtung 100, 200, .... ein, welche dafür sorgt, dass die Weiterverarbeitung der Buchblocks über die verschiedenen nachgeschalteten Maschinen, beispielsweise Vorsatzbogenanleger C, Klebebinder D, Dreischneider E takteinhaltend gewährleistet ist. Der Dreischneider E sorgt in letzter Instanz für eine Schlusskonfektionierung der vom Klebebinder bereitgestellten Buchblocks F, unabhängig ihrer Dicken und Grössen. Effizient lässt sich der hohe Durchlauf über die vorgenannte Produktionsanlage B nur dann durchsetzen, wenn die Reihenfolge der Stapelung die strenge Vorgabe für die individuelle weitere Bearbeitung der Buchblocks bildet, d.h., die Entstapelungsvorrichtung 100, 200, ..., muss so aufgebaut sein, dass die vorgegebene Reihenfolge der Buchblocks im Stapel, beginnend von unten, aufrechterhalten wird, d.h. die Entstapelung muss demnach immer jeweils der unterste Buchblock zuerst aus dem Stapel ausgefördert werden, unter fortlaufender Einhaltung des zugrundeliegenden Bearbeitungstakts bei den folgenden Stationen (C, D, E) und unter Berücksichtigung der unterschiedlichen Dimensionen der zu bearbeitenden Buchblocks.

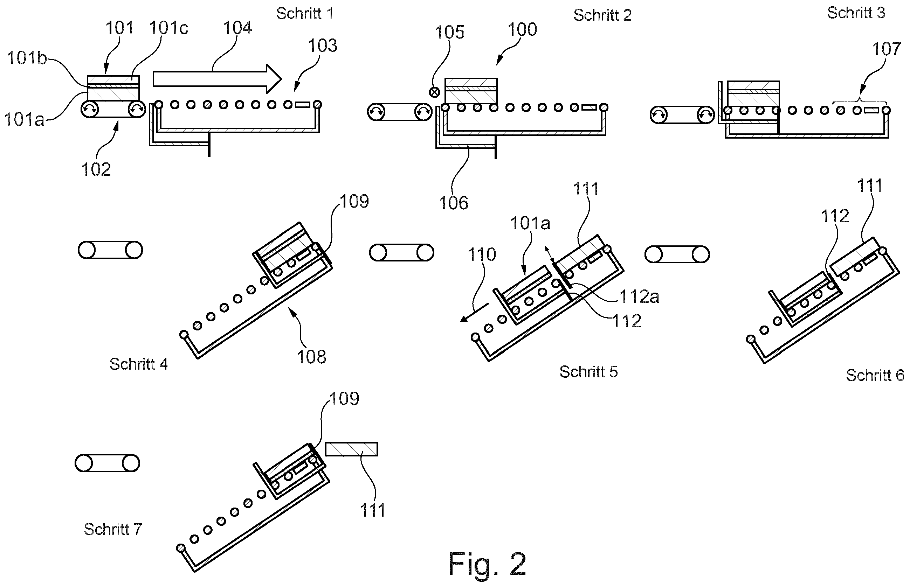

Aus Figur 2 geht eine erste Ausführung einer Entstapelungsvorrichtung 100 hervor, dessen Abfolge darin besteht, dass der aus Buchblocks bestehende Stapel 101 anfänglich durch ein Transportband 102 zu einem Schwenktisch 103 gemäss vorgegebener Materialflussrichtung 104 (Schritt 1-2) befördert wird, wie dies aus den gezeigten Schritten 1 und 2 hervorgeht. Dabei detektiert eine Lichtschranke 105 den Beginn und das Ende des Stapels 102, wobei durch die gleichzeitig erhobene oder definierte Geschwindigkeit des Stapels in Materialflussrichtung wird die Stapelbreite festgestellt. Auf Grund dieser Ermittlung über die Breite des Stapels lässt sich zeitlich und punktgenau die Zustellung eines zunächst im Ruhezustand verharrenden Schiebers 106 festhalten. Bei dem nun folgenden Ablauf (Schritt 3) fährt der Schieber 106 rückenseitig des Stapels 101 nach oben und unterstützt diesem in seinem weiteren Transportverlauf, der durch eine rückwärtsgerichtete Bewegung charakterisiert ist, so dass der Stapel gerade durch diese geführte Bewegung keine Schädigung am Bestand erfährt. Durch den genannten Schieber 106 erfährt der Stapel in weiterem Transportverlauf eine nachhaltige begleitende Abstützung, wobei dieser Schieber an die Transportbewegung des Schwenktisches 103 gekoppelt ist oder durch einen eigenen Antrieb die Fortbewegung des Stapels in gewissen Grenzen unterstützt. Bei letztgenannter Ausführungsart liesse sich selbst bei Ausfall der Motorik des Schwenktisches 103 die Entstapelung aufrechterhalten.

Sodann wird der Stapel bis zu einer endseitig des Schwenktisches bestimmten Position 107 (Schritt 3) geführt, in welcher dieser durch eine steuerbare Ansaugkraft kraftschlüssig erfasst wird (Schritt 4), worauf auf den untersten Buchblock 111 (siehe Schritt 5) durch die dort wirkende Ansaugkraft einen Kraftschluss ausgeübt wird, der so lange bestehen bleibt, bis die steuerbare Ansaugkraft in Betrieb ist. Bei dieser stabilisierten Ausgangslage des Stapels, einerseits durch den Einsatz des Schiebers 106 und andererseits durch den wirkenden Kraftschluss, kann zur vorgegebenen nach oben gerichteten Neigung 108 des Schwenktisches geschritten werden, welche eine weitere Ausgangslage für die Entstapelung darstellt, wobei bei Schritt 4 dieser Figur auf einen Anschlag 109 hingewiesen wird, der intermittierend eingreift und in Wirkverbindung mit dem Schieber 106 steht (siehe Schritt 7), dieser hält den Stapel nach wie vor stabil am Ort, dadurch besteht auch keine Gefahr, dass der obere Teil des Stapels, ab dem untersten Buchblock, rückwärts abrutschen kann, wie dies aus Schritt 4 hervorgeht. Die nächste operationelle Umsetzung der Entstapelung erfolgt durch gezielte Abläufe, indem der genannte Schieber 106 bei geneigter Lage 108 des Schwenktisches 103 eine Rückwärtsbewegung 110 ausführt, welche sich auf die Buchblocks des Reststapels auswirkt, indem dieser ebenfalls der Rückwärtsbewegung des Schiebers folgt, wie dies aus Schritt 5 hervorgeht. Daraus geht hier recht deutlich die technische Relevanz des Schiebers 106 in Wirkverbindung mit dem integrierten Stössel 112 hervor, insbesondere wenn davon ausgegangen wird, dass diese Entstapelung auch bei schweren Buchblocks eingesetzt werden kann, denn ein ungeordnetes rückwärtsgerichtetes Rutschen der Buchblocks des Reststapels würde die nachfolgende Entstapelung erheblich erschweren. Bei dieser Sachlage ist eine weitere Abstützung vorgesehen, welche sich auf den Weitertransport des untersten Buchblocks 111 bezieht: Hier greift eine von unten intermittierend betreibbare Lasche 112a ein (ihre Bewegung ist durch Pfeile gekennzeichnet), welche sich auf diesen Buchblock abstützend richtet, so dass damit sichergestellt wird, dass insbesondere dicke und schwere Buchblocks nach dem Separierungsprozess nicht auseinanderfallen. Nach vollzogener Trennung des Teilstapels 101a wird zwischen Vorderkante des Reststapels 101a und Hinterkante des dort kraftschlüssig erfassten Buchblocks 111 ein Stössel 112 nach oben gefahren (Schritt 6), der auf die Lage des letztgenannten Buchblocks 111 ausgerichtet ist. Sonach liegt eine effektive Separierung zwischen dem Reststapel 101a und dem kraftschlüssig erfassten Buchblock 111 vor, welche wiederum Ausgangspunkt für die weiteren Operationen der Entstapelung ist, nämlich, dass die auf den Buchblock wirkende Ansaugkraft intermediär abgestellt wird, wodurch dieser weiterbefördert werden kann, in der Regel durch transportmässige Aktivierung des Schwenktisches, wobei der Stössel 112 solange in Position verharrt, bis der Reststapel 101a dort angeschlagen hat, damit die eingeleitete Weiterbeförderung des freigegebenen Buchblocks 111 keine Interferenzen erfährt (Schritt 7), wobei dieser Vorgang ebenfalls durch eine weitere Lichtschranke überwacht wird. Nachdem der Stössel 112 wieder eingefahren ist, setzt sich die Dynamik für die weitere Entstapelung ein (Schritt 7), wiederum beginnend mit dem untersten Buchblock (Schritte 1-7), wobei diese nachfolgende Verschiebung des Stapels durch den aktivierten Schieber 109 lagemässig bestimmt wird.

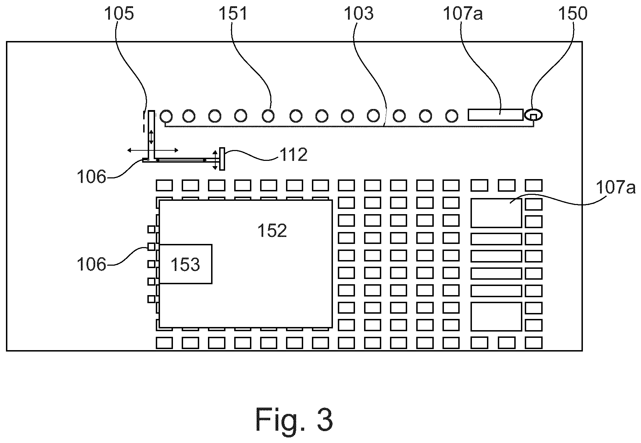

Figur 3 zeigt im oberen Teil die stilisierte Konfiguration des Schwenktisches 103 nach Figur 2, während der untere Teil eine Draufsicht der Tischplatte zeigt. Die dargestellte Konfiguration der Tischplatte ist so zu gestalten, dass unterschiedliche Formate (Breite/Höhe) des von den Buchblocks gebildeten Stapels (siehe Figur 2) fortlaufend verarbeitet werden können. Gezeigt werden in dieser Figur 3 die Auslegung der Rollen 151, hier vorzugsweise als Hubwagenrollen ausgebildet, welche dafür sorgen, dass der Stapel (siehe Figur 2) fliessend von der Zubringerstruktur auf den Schwenktisch 103 hinübergleiten kann. Angedeutet wird hier des Weiteren die Drehachse 150 des Schwenktisches 103 dargestellt, durch welche die unter Figur 2 beschriebene Neigung ermöglicht wird. Ferner werden hier die kinematischen Bewegungen des Schiebers 106 und des Stössels 112 durch Pfeile angedeutet, welche in Wirkverbindung zueinander die Umsetzung der Entstapelung mitermöglichen, wenn es darum geht, verschiedene Dimensionen der Buchblocks zu erfassen. Zu diesem Zweck sind demnach kopfseitig des Schwenktisches 103 eine Reihe von zueinander beabstandeten Schiebern/Stösseln 106/112 angeordnet, welche zwischen der von den Rollen 151 gebildeten Bahnen verschiebbar sind. Eine erste Variante besteht darin, dass jeweils die ganze Gruppe Schieber/Stössel angesteuert werden, unabhängig der vorliegenden Dimensionierung des Buchblocks, bei einer weiteren Variante wird die Anzahl der jeweils aktivierten Schieber/Stössel in Abhängigkeit zu der vorliegenden Blockbreite des Buchblocks vorgesehen: bei einem Minimalformat beispielsweise 1-2 Schieber/Stössel, bei einem Maximalformat kommt die ganze Gruppe gleichzeitig zum Einsatz.

Zwischen einem Minimalformat 153 (Blockhöhe 120 mm/Blockbreite 100mm) und einem Maximalformat (Blockhöhe 380 mm/Blockbreite 330 mm) lässt sich ein breites Spektrum der Buchblocks durchschleusen, wobei endseitig des Schwenktisches unterschiedlich dimensionierte Vakuumplatten 107a (siehe Figur 2) angeordnet sind, welche unmittelbar die Ansaugkraft auf den erfassten Buchblock ausüben. Ferner wird hier noch die Lichtschranke 105 und deren Betrieb gezeigt. Im Zusammenhang mit der Bearbeitung unterschiedlicher Buchblocks-Formate wird ergänzt, dass sich eine Buchblockdicke zwischen 1.5 und 65 mm ohne zusätzliche Vorkehrungen durchschleusen lässt, wobei etwaige Vorkehrungen jeweils leichterer Natur sind, so dass deren Implementierung auf alle Fälle umsetzungsattraktiv bleibt. Bei einer konventionellen Taktleistung über alle möglichen Dimensionierungen der Buchblocks lassen sich Produktionen von mindestens 4'000 Einheiten pro Stunde erzielen. Selbst bei einem Betrieb von "Book of One", d.h. jeder Buchblock ist hier eine individuelle Ausführung, lassen sich Taktleistungen von mindestens 2'000 Einheiten pro Stunde erzielen, sonach geht aus diesen Zahlen recht deutlich hervor, dass die erfindungsgemässe Entstapelung in den einzelnen hier dargelegten Konzepten (Figuren 2, 3 und 4.1-4.10, 5 und 6a/6b) eine wesentliche Bereicherung im Stande der Technik bilden.

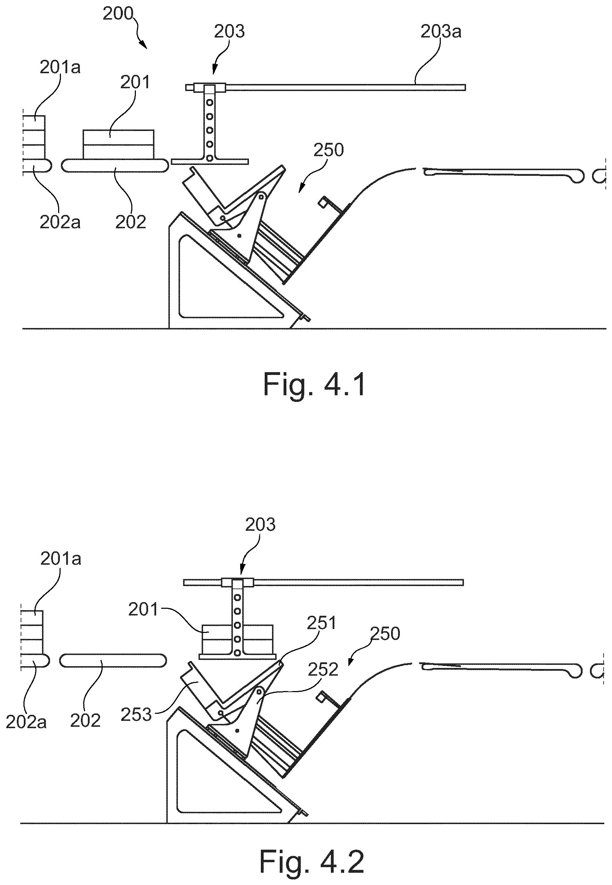

Die dynamische Umsetzung des zweiten Konzeptes 200 einer Entstapelung gemäss den Figuren 4.1 bis 4.10, welche grundsätzlich für den Betrieb eines ersten Entstapelungsvorganges 250a (siehe Figur 4.6) und auch eines zweiten Entstapelungsvorganges 250b (siehe Figur 5) zugrunde gelegt werden können, wird nachfolgend anhand einer strukturierten Folgedarstellung der einzelnen Schritte wiedergegeben, welche an sich jeweils eine punktuelle Standaufnahme des ganzen Verlaufs darstellen, wobei die sich daraus ergebende Folge in ihrer Gesamtheit, Figuren 4.1 - 4.10, lässt die fortlaufende Dynamik dieser Entstapelung auf Anhieb erkennen. Die Abfolge und Nummerierung der Figuren sind bewusst so gewählt worden, dass dadurch unmittelbare Hinweise auf die einzelnen Schritte des Ablaufs vorliegen.

Diese Entstapelung 200 kommt vorzugsweise bei höheren Taktzahlen zum Einsatz kommt, sei es als autonome Einrichtung, sei es in Verbindung mit der Entstapelung 100 des voran dargelegten Konzeptes gemäss Figuren 2 und 3, wobei es sich ohne Weiteres vorstellen lässt, die Entstapelung 100 nach dem ersten Konzept (Figuren 2 und 3) für eine Produktion von «Book of one» heranzuziehen, die übrige Produktion dann mit dem zweiten Konzept (Figuren 4.1 - 4.10 und 5, 6a/6b) zu betreiben, wobei diese letztgenannte dann für grössere Lose durchgehend produzieren kann. Diese kombinierte Betriebsweise ist immer dann in Betracht zu ziehen, wenn die Möglichkeit besteht, gleichzeitig auf beide Konzepte 100, 200, zurückgreifen zu können, und wenn die Produktion von «Book of One» zwar intermittierend erfolgt, aber doch bei hoher Häufigkeit stattfindet.

Diese Entstapelung 200 nach dem zweiten Konzept gemäss den Figuren 4.1 - 4.10 unter Hinzuziehen der weiteren Figuren 5, 6a, 6b, welche die einzelnen signifikanten Schritte der Entstapelung darstellen, läuft wie folgt ab:

Figur 4.1 gibt Schritt 1 wieder, dabei wird der Stapel 201 auf das Eintaktband 202a gefördert, das dem Transportband der Entstapelung 100 (Figuren 2 und 3) entspricht. Bei dieser Ausgangslage ist ersichtlich, dass der nächste Stapel 201a bereits Position für den nächsten Entstapelungszyklus bezogen hat. Dieser zur Entstapelung bereit gestellte Stapel 201 wird zunächst an eine Zwischenplattform 202 überführt, und wird dann durch weitere abgestimmte Transportschritte zur eigentlichen Entstapelung überführt, welche in einer Entstapelungsvorrichtung 250 stattfindet. Die Zwischenschaltung der Zwischenplattform 202 als Pufferzone immer dann von Vorteil, wenn die Entstapelungsvorrichtung 250 temporär nicht in der Lage ist, die ankommenden Stapel 201 in Takt zu verarbeiten. Es ist des Weiteren aus dieser Figur die Warteposition des Portal-Transporteurs 203 ersichtlich, dessen Aufgabe, wie dies aus den folgenden Figuren noch eingehend zur Darstellung und Beschreibung gelangen wird, darin besteht, den anstehenden Stapel 201 zu übernehmen und dieser über die Erstreckung der Portalinfrastruktur 203a so zu positionieren, dass die Entstapelungsvorrichtung 250 dann in Aktion tritt und gezielt betrieben werden kann.

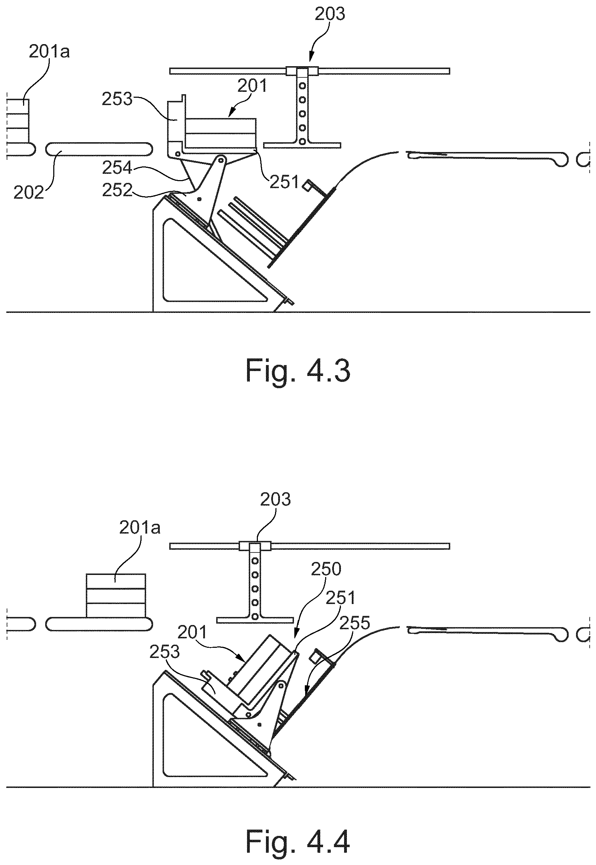

Figur 4.2 zeigt den weiteren Verlauf der Entstapelung dahingehend, dass der Portal-Transporteur 203 nun durch eine Übergabeprozedur den Stapel 201 übernimmt, so dass dieser in eine optimale Position gegenüber der Entstapelungsvorrichtung 250 überführt wird, d.h. diese Position ist dadurch charakterisiert, dass der zur Entstapelungsvorrichtung 250 gehörende Aufnahmesupport 251 eine Lage einnimmt, welche die dann folgende Übernahme des Stapels 201 indiziert. Dabei erfolgt die nettosenkrechte Verschiebung des Aufnahmesupports 251 Richtung Portal-Transporteur 203 mit dem dort fertig für die Übernahme positionierten Stapel 201 durch ein Hochfahren des Trägers 252 des Aufnahmesupports 251 entlang einer schräggeführten Führung, womit diese Schräge beim Entstapelungsvorgang die winklige Neigung des Stapels vorgibt. Diese Ausgangslage lässt sich gut für die unter Zuhilfenahme einer nicht näher gezeigten Lichtschranke (siehe die Figur 3) für die Bestimmung der Stapelbreite resp. der Breite der Buchblocks verwenden, wobei diese Bestimmung auch stromauf stattfinden kann. Der nächste Schritt betrifft die Erfassung des Stapels 201 durch ein weiteres Hochfahren des Aufnahmesupports 251, der dann im weiteren Verlauf der Entstapelung die Funktion eines Stapelliftes erfüllt, wie dies aus Figur 4.3 näher dargestellt ist.

Figur 4.3 zeigt die unmittelbar stattgefundene Übergabe des Stapels 201 von dem Portal-Transporteur 203 an den Aufnahmesupport 251, wobei sich dieser bei dieser Übergabe durch eine Teilrotation, unter Berücksichtigung der Relativbewegung der beiden Elemente im Taktbetrieb, Aufnahmesupport 251/Portal-Transporteur 203, in eine horizontale Position gegenüber der unteren Ebene des Stapels 201 übergeht, und mithin, beispielweise durch eine Hubeinrichtung 254, richtet sich auch seine seitlich angeordnete Führungswand 253 in eine vertikale Ebene auf, so dass diese eine Anschlagwand gegenüber dem aufgenommenen Stapel bildet. Sonach geht der Aufnahmesupport 251 inkl. Führungswand 253 eine Konfiguration ein, welche zu einer maximierten Stabilisierung des Stapels 201 auf den weiteren Weg zur eigentlichen Entstapelung desselben führt.

Figur 4.4 zeigt eine weitere Lage des Stapels 201 innerhalb der Entstapelungsvorrichtung 250, auf den Weg Richtung Förderebene 255 für die weitere Beförderung der dort subsequent entstapelten Buchblocks (201) nach unten gefahren wird, wobei der technische Ablauf der eigentlichen Entstapelung in den folgenden Figuren gezeigt und erläutert wird. Gezeigt wird bei diesem Fortlauf, dass der nächste Stapel 201a bereits Position bezogen hat, um von dem Portal-Transporteur 203 für den weiteren Entstapelungszyklus übernommen zu werden.

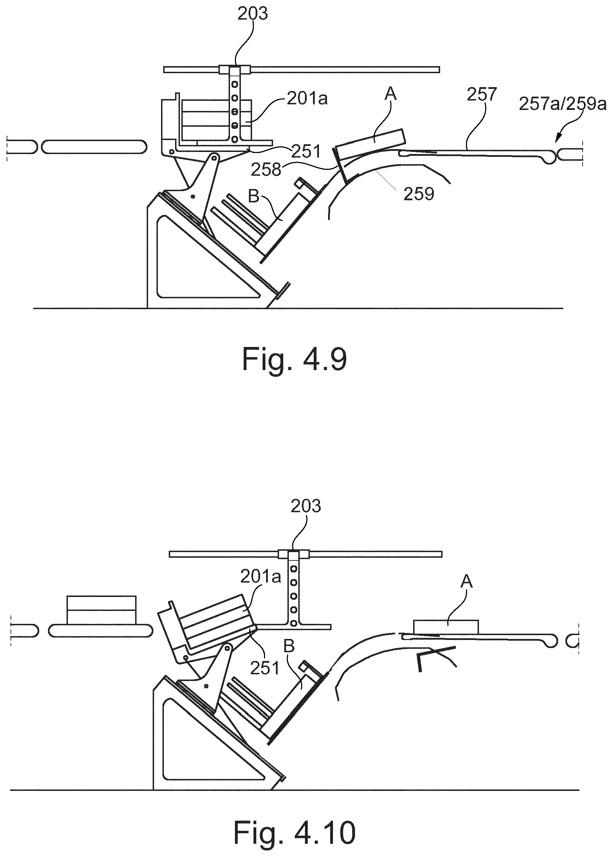

Figur 4.5 zeigt die unmittelbare Weiterführung der Zustellung des Stapels gemäss Figur 4.4, so dass der Stapel durch die geführte Führung anhand des Aufnahmesupports 251 und der Führungswand 253 geleitet wird, seine Endlage erreicht hat, von welcher dann die eigentliche Entstapelung (Separierung) der Buchblocks eingeleitet wird. Diese Separierung wird zunächst durch die Aktivierung eines Rückhalters 256, der den unmittelbar zweituntersten Buchblock B gegenkräftig zwecks Weiterbeförderung des untersten Buchblocks A stabilisiert, so dass der letztgenannte Buchblock hemmungsfrei zur Verfügung steht, und dann über den Betrieb eines Förderbandes 257 weitertransportiert werden kann, wobei dieses Förderband im Durchlauf (siehe Figur 4.9) betrieben wird, welches gleichzeitig in Wirkverbindung mit einer Mitnehmerfingerkette 259 und Mitnehmerfingern 258 steht, welche (258) die Buchblocks unter Einhaltung des vorgegebenen Takts einzeln befördern.

Figur 4.6 zeigt den Beginn der eigentlichen Entstapelung (Separierung) der einzelnen Buckblocks A, B, aus dem jeweiligen Stapel, nachdem diese durch den Aufnahmesupport 251 grundseitig der abgeladen worden sind, und diese sich, im beschriebenen Vorgang nach Figur 4.1, zur Übernahme des nächsten Stapels 201a auf den Weg macht. Der Vorgang der hier eingeleiteten Entstapelung 250b wird in den folgenden Figuren näher erläutert, wobei die gewichtigere Ausführung des zweiten Konzeptes wird detailliert in den Figuren 5 und 6 erläutert.

Grundsätzlich ist es so, dass sich die Entstapelungsvorrichtung 250 des zweiten Konzeptes auf zwei Arten betreiben lässt: Einerseits also durch einen Entstapelungsvorgang 250a, insbesondere in den Figuren 4.5 und 4.6 dargestellt, andererseits durch einen anders aufgebauten Entstapelungsvorgang 250b nach den Figuren 5, 6a, 6b, abwickeln. Während also der Entstapelungsvorgang 250a gewichtig darauf basiert, von einem vorzugsweise mechanisch betreibbaren Rückhalter 256 betrieben zu werden, d.h., die Vereinzelung und Weitertransport des jeweils untersten Buchblocks wird während dieser Vorgangsphase lediglich durch den Einsatz ebendieses Rückhalters 256 sichergestellt, indem dieser auf mechanischem Wege gegenüber den oberhalb des untersten Buchblocks noch ruhenden Produkten dagegenhält. Der unterste nun freigegebene Buchblock wird auch sonst durch keine weiteren Vorkehrungen gehemmt. Anders wird die Entstapelungsvorrichtung 250 betrieben, wenn der Entstapelungsvorgang 250b nach den Figuren 5, 6a, 6b zum Zuge kommt, welche Figuren weiter unten näher beschrieben werden, auf welche hier zur Vermeidung unnötiger Wiederholungen verwiesen wird. Dieser Entstapelungsvorgang 250b steht auch schlichtweg zur maximierten Bereicherung im Stande der Technik im Vordergrunde, dies vor allem, weil damit eine Produktion mit hohen Taktzahlen bei rasch wechselnden Dimensionierungen, Dicken und Aufmachungen der Buchblocks gewährleistet werden kann. Die übrigen Abfolgen der Entstapelungsvorrichtung 250 bezogen auf den letztgenannten Entstapelungsvorgang 250b lassen grundsätzlich auch durch Heranziehen der Figuren 4.1 - 4.10 bestreiten, wobei der einzige Unterschied dann darin besteht, dass die eigentlichen Vereinzelungen (250a gegenüber 250b) der Buchblocks unterschiedlich gestaltet sind, und auch unterschiedlich betrieben werden, wobei der finale Zweck der beiden miteinander übereinstimmt.

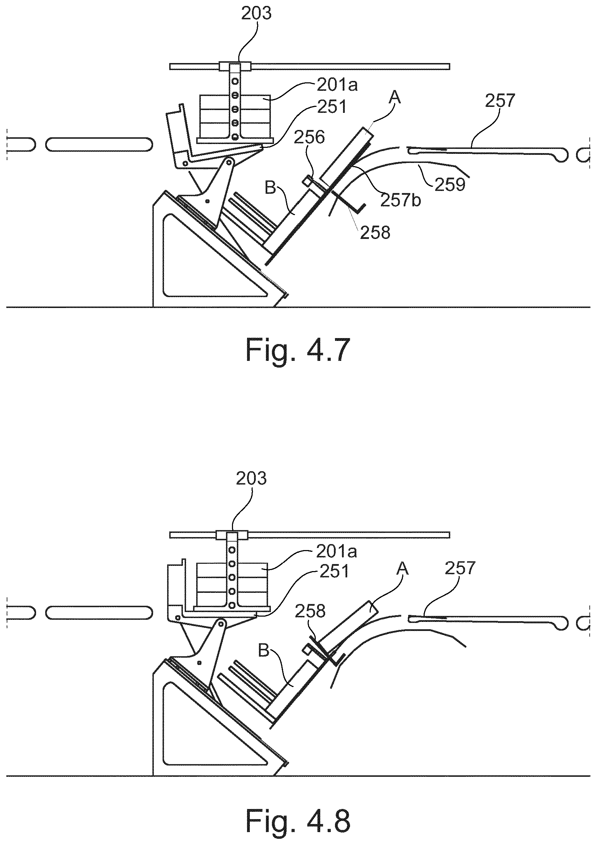

Figur 4.7 zeigt grundsätzlich die stattgefundene Separierung der zum betreffenden Stapel gehörenden Buchblocks A, B, welche individuell und taktsubsequent auf dem Transportband 257 unter Zuhilfenahme jeweils eines Mitnehmerfingers 258 der Mitnehmerfingerkette 259 weitertransportiert werden. Bei diesem Teilvorgang ist des Weiteren ersichtlich, dass der Aufnahmesupport 251 unmittelbar vor der Übernahme des nächsten Stapels 201a steht, damit wird also jene Lage beschrieben, die bereits unter Figur 4.2 zur Darstellung gelangt ist. Bei dieser Ausgangslage nimmt der Rückhalter 256 eine neutrale Position ein, wodurch der zunächst anstehende Buchblock frei befördert werden kann, zuerst über eine Übergangsstrecke 257b, anschliessend dann über ordentliche Transportband 257, wo der Buchblock von den nächstangeordneten Mitnehmerfinger 258 der Mitnehmerfingerkette 259 taktkonform erfasst wird. Dabei ist folgendes zugrunde gelegt: Sowohl Transportband 257 als auch Mitnehmerfingerkette 259 werden eigenständig betrieben. Die Mitnehmerfingerkette 259 übernimmt das Produkt von der Separierung (Entstapelung) und bringt dieses in die horizontale Lage, wo das Produkt von einem nachfolgenden Förderband übernommen wird. Dieses Förderband wird ebenfalls eigenständig betrieben.

Figur 4.8 zeigt die fortlaufende Weiterführung der Separierung der Buchblocks A, B, nach der Beschreibung unter Figur 4.7, wobei der erste Buchblock nunmehr durch den Mitnehmerfinger 258 kraftanliegend angeschlagen ist, so dass eine taktsichere Weiterbeförderung über das Transportband 257 gesichert ist. Zur selben Zeit steht der Aufnahmesupport 251 unmittelbar vor Übernahme des nächstangelieferten Stapels 201a. Hier liegt dann zur Entstapelung eine grössere Anzahl Buchblocks gegenüber dem vorangehenden Stapel 201 vor, am Ablauf der Entstapelung selbst, gemäss den vorangehenden Figuren, ändert das nichts. Dies geht auch aus den Figuren 5 und 6 hervor.

Figur 4.9 zeigt die Weiterbeförderung des zunächst separierten Buchblocks A, des Weiteren die vollständige Übernahme des nächstfolgenden Stapels und die schematische Andeutung des durchlaufenden Förderbandes 257a, bezogen auf das Förderband 257, unter gleichzeitiger Miteinbeziehung des Durchlaufs 259a, bezogen auf die Mitnehmerfingerkette 259, wobei Transportband 257 und Mitnehmerfingerkette 259 autonom betrieben werden.

Figur 4.10 zeigt den Weiterverlauf der Separierung der Buchblocks A, B, wobei aus dieser Figur hervorgeht, dass der letzte Buchblock B des ersten Stapels 201 unterwegs ist, die Entstapelungsvorrichtung 250 zu verlassen, so dass der ankommende neu Stapel 201a ohne Unterbruch zur Separierung nach den vorangehenden Figuren eingefahren werden kann.

Vorliegend werden aus praktischen Überlegungen die Figuren 5, 6a und 6b gemeinsam beschrieben. Figur 5 zeigt einen Entstapelungsvorgang 250b der Buchblocks, der gegenüber dem vorangehenden Entstapelungsvorgang 250a, wie dies insbesondere in den Figuren 4.5 und 4.6 dargestellt ist, eine weitergehende erfinderische Leistung unter Schutz stellt, wobei auch für die erweiterte Ausführung (250b) des zweiten erweiterten Konzeptes auf die einschlägigen Vorgänge der Figuren 4.1 - 4.10 abgestellt wird, wenn es darum geht, die Transport und Platzierung der Druckprodukte sicherzustellen, so dass vorliegend nicht nötig ist, nochmals auf diese Aspekte einzugehen.

Der Stapel nach Figur 5 besteht hier aus drei Buchblocks C, D, E, entsprechend dem Stapel 201a in den vorangehenden Figuren, wobei die Anzahl der Buchblocks jederzeit gewichtig grösser sein kann. Entsprechend dem hier zugrunde liegenden Separierungsprozess (Entstapelung) wird der gesamte Stapel, um die wirkende Reibungskraft auf den zu separierenden Buchblock zu reduzieren, in eine Schieflage versetzt. Der unterste Buchblock C im Stapel wird durch eine bombierte Vakuumplatte 270 gehalten und durch eine Servo-Achse 271 vom Stapel separiert, wobei diese Servo-Achse ein Losrütteln im Sinne eines zweifachen Losbrechens ermöglicht. Eine Stütze 272 sorgt dafür, dass die Produkte im Verlauf dieses Prozesses nicht beschädigt werden, wobei sich in der Praxis herauskristallisiert hat, dass ab ca. 30 mmm Buchblockdicke eine Stütze benötigt wird. Ein Rückhalter 273 sorgt dafür, dass die dem untersten Buchblock C darüberliegenden Produkte D, E, während des Entstapelungsvorgangs 250b nicht miteinbezogen resp. mitgeschleift werden können.

Ein mit einem Rüttler 274 in Wirkverbindung stehender Anschlag 275 lockert den Stapel auf und sorgt zudem dafür, dass die gewünschte Ausrichtung der Buchblocks unterstützt wird. Die Geometrie des dickenvariablen Rückhalters 273 sorgt des Weiteren dafür, dass eine Fase 276 desselben in Richtung der Vereinzelung zur Verfügung steht, welche bei einer gewissen Ungenauigkeit der Buchblockdicke eingreift, damit eine solche den weiteren Betrieb nicht unzulässig hemmt. Grenzen dieses Auffangens könnten dann entstehen, wenn Buchblocks aufeinanderfolgen, welche extreme Dicken aufweisen. Um diese ebenfalls fortlaufend auffangen zu können, ist der Rückhalter 273 gemäss Figur 6a durch die bereits genannte Fase 276 ergänzt, welche leicht tiefer als die Buchblockdicke eingestellt ist, so dass der Buchblock dann unter dem Rückhalter 273 durchgezwängt werden kann. Ein darauf liegendes dünnes Produkt könnte somit zurückgehalten werden. Wird der Rückhalter 273 gemäss Figur 6b demgegenüber leicht zu hoch eingestellt, steigt das Risiko, dass ein dünnes Produkt nachrutschen kann. Remedur wird hiermit geschaffen, dass sich auf der Seite in Richtung des Stapels Durchflussöffnungen 277a, 277b befinden, durch welche eine auf Stapel resp. Buchblocks wirkende Blasluft 278a, 278b zu deren Entlastung zugeführt wird, womit die Dickenvariabilität der Buchblocks der verschiedenen Stapel 201, 201a nachhaltig aufgefangen werden kann. Der Prozessablauf gestaltet sich grundsätzlich nach den Abläufen, wie sie nach dem ersten oder zweiten Konzept beschrieben sind, auf welche zur Vermeidung unnötiger Wiederholungen verwiesen wird, wobei bei diesem zweiten Konzept weitergehende Elemente, wie zum Beispiel Rüttler 274, Dickeninformation über BC-Leser 279, Bombierung des Hubtisches 270 und dessen Ansaugkraftimplementierung 280 eingebaut werden können, welche den Separierungsprozess qualitativ steigern.

Der Entstapelungsvorgang gemäss dem zweiten erweiterten Konzept nach den Figuren 4.1 - 4.10, 5, 6a, 6b lässt sich des Weiteren unter Zuhilfenahme einer Konfiguration zur Ausübung einer Vakuumkraft auf den untersten Buchblock nach der Beschreibung gemäss den Figuren 2 und 3 durchführen, allenfalls nach Bedarf unter Hinzuziehen eines Rückhalters nach Figur 5, Pos. 273 resp. Figur 4.5, Pos. 256.

## Patentansprüche

1. Vorrichtung zur Vereinzelung von zu einem Stapel zusammengefassten Druckprodukten, wie Bücher, Buchblocks, Broschüren, wobei die Vorrichtung mindestens ein durch einen Antrieb betreibbares Fördermittel für den Transport des Stapels aufweist, wobei das Fördermittel mit mindestens einem zustellbaren Element in Wirkverbindung steht, durch dessen Einsatz eine taktgemässe Vereinzelung der zum Stapel gehörenden Druckprodukte umsetzbar ist, **dadurch gekennzeichnet, dass** beim Transport des Stapels (101) in Transportrichtung (104) entlang des Fördermittels (103) durch mindestens einen Sensor (105) die Breite dieses Stapels oder des einzelnen Druckprodukts (101a, 101b, 101c) detektierbar ist, dass in Abhängigkeit dieser Stapelbreite ein erstes Element (106) zustellbar ist, das der Unterstützung und/oder Führung des Stapels in Transportrichtung dient, so dass der Stapel entlang des Fördermittels bis zu einer endseitig angeordneten Position (107) transportierbar ist, in welcher eine Ansaugkraft auf das unterste Druckprodukt (111) im Stapel ausübbar ist, dass bei dieser Position das Fördermittel in eine vertikal gerichtete Neigung (108) überführbar ist, dass nach vollzogener Neigung das erste Element (106) unter Einbindung des Reststapels rückwärts (110) bewegbar ist, bis das unterste durch Ansaugkraft fixierte Druckprodukt (111) frei aufliegt, dass dieses Druckprodukt durch eine intermittierend betreibbare Lasche (112a) abstützbar ist, dass das Druckprodukt (111) unter gleichzeitiger Ausschaltung der Ansaugkraft weitertransportierbar ist, und dass die nachfolgenden Druckprodukte des Stapels (101) in gleicher Manier separierbar und weitertransportierbar sind.

2. Vorrichtung nach Anspruch 1, **dadurch gekennzeichnet, dass** das Fördermittel als Schwenktisch (103) ausgebildet ist.

3. Vorrichtung nach Anspruch 1, **dadurch gekennzeichnet, dass** die intermittierend betreibbare Lasche (112a) auf das für den Weitertransport separierte Druckprodukt (111) ausgerichtet ist, und dass durch die ausgefahrene Lasche (112a) dicke und schwere Druckprodukte gegen ein Auseinanderfallen bewahrt bleiben.

4. Vorrichtung nach Anspruch 1, **dadurch gekennzeichnet, dass** die einzelnen Druckprodukte anschliessend über ein weiteres Transportband in Wirkverbindung mit einer autonom betreibbaren Mitnehmerfingerkette einer Weiterverarbeitungsmaschine zuführbar sind.

5. Vorrichtung zur Vereinzelung von zu einem Stapel zusammengefassten Druckprodukten, wie Bücher, Buchblocks, Broschüren, mit mindestens einer Transporteinrichtung und einer Entstapelungsvorrichtung, in welcher die taktgemässe Vereinzelung der Druckprodukte durchführbar ist, **dadurch gekennzeichnet, dass** die Vorrichtung folgende Elemente aufweist:
a) Eine Transporteinrichtung (203) ist für die Übernahme eines von einem Transportband (202) beigestellten Stapels (201) ausgelegt, und die Transporteinrichtung führt den Stapel bis auf Höhe einer darunter angeordneten Entstapelungsvorrichtung (250);
b) Eine Lichtschranke oder ein Sensor im Bereich der Transporteinrichtung detektiert die Stapelbreite und/oder die Breite der einzelnen Druckprodukte und leitet diese Informationen an die Entstapelungsvorrichtung weiter;
c) Ein zur Entstapelungsvorrichtung (250) gehörender Aufnahmesupport (251) bewegt sich von einer Betriebsposition senkrecht oder quasi-senkrecht auf die Transporteinrichtung (203) zu, bis jene Stelle erreicht ist, bei welcher eine Übergabe des Stapels (201) von der Entstapelungsvorrichtung zum Aufnahmesupport durchführbar ist;
d) Der Aufnahmesupport mit dem übernommenen Stapel fährt wieder an seine Betriebsposition zurück, in welcher ein Entstapelungsvorgang (250a) einleitbar ist;
e) Zwischenzeitlich fährt die Transporteinrichtung (203) zu ihrer Ausgangsposition zur Übernahme eines nachgelieferten Stapels (201a) zurück;
f) Bei dieser Betriebsposition greift zur Durchführung des Entstapelungsvorganges (250a) mindestens eine mechanisch angetriebene Rückhalterung (256) ein, durch welche an geeigneter Stelle auf mindestens ein Druckprodukt (B) oberhalb des untersten Druckprodukts (A) eine Kraft ausübbar ist, durch welche das unterste Druckprodukt dann ungehemmt weitertransportierbar ist;
g) Das unterste Druckprodukt (A) ist darauf von einem unterhalb des Aufnahmesupports betriebenen Förderband (257) erfassbar und unter Zuhilfenahme einer mit Mitnehmerfingern (258) ausgestatteten Mitnehmerfingerkette (259) weitertransportierbar;
h) Die restlichen Druckprodukte (A, ...) sind sukzessiv von der Rückhalterung (256) frei gegeben, und sie sind einzeln in selber Manier weitertransportierbar

6. Vorrichtung nach Anspruch 5, **dadurch gekennzeichnet, dass** das Förderband und die Mitnehmerfingerkette autonom betreibbar sind.

7. Vorrichtung nach Anspruch 5, **dadurch gekennzeichnet, dass** die Transporteinrichtung als Portal-Transporteur (203) ausgelegt ist.

8. Vorrichtung nach Anspruch 5, **dadurch gekennzeichnet, dass** der Aufnahmesupport (251) für den Stapel (201, 201a) durch eine seitlich angeordnete Führungswand (253) ergänzt ist, durch welche der Stapel beim Weitertransport zum Ort des Entstapelungsvorganges (250a) eine gegen Verrutschen abgesicherte Lage sicherstellt.

9. Vorrichtung nach Anspruch 5, **dadurch gekennzeichnet, dass** der Aufnahmesupport (251) bei der Übernahme des Stapels von der Transporteinrichtung eine geschwenkte Lage aufweist, dass der Aufnahmesupport mit Stapel über eine winklig verlaufende Führung bis zum Ort des Entstapelungsvorganges transportierbar ist, dass die winklig verlaufende Führung jene Neigung aufweist, welche mit der Lage des Stapels vor Einleitung des Entstapelungsvorganges korrespondiert.

10. Vorrichtung nach Anspruch 9, **dadurch gekennzeichnet, dass** der Verlauf der Neigung der zum Stapel gehörenden Druckprodukte parallel zum Verlauf des Förderbandes (257) ausgerichtet ist.

11. Vorrichtung nach Anspruch 5, **dadurch gekennzeichnet, dass** die Rückhalterung (256) mit Wirkung auf die Druckprodukte oberhalb des untersten Druckprodukts durch eine mechanische, elektrische, hydraulische Kraft angetrieben ist.

12. Vorrichtung zur Vereinzelung von zu einem Stapel zusammengefassten Druckprodukten, wie Bücher, Buchblocks, Broschüren, mit mindestens einer Transporteinrichtung und einer Entstapelungsvorrichtung, in welcher die taktgemässe Vereinzelung der Druckprodukte durchführbar ist, **dadurch gekennzeichnet, dass** die Vorrichtung folgende Elemente aufweist:
a) Eine Transporteinrichtung (203) ist für die Übernahme eines von einem Transportband beigestellten Stapels (201) ausgelegt, wobei der Stapel durch die Transporteinrichtung bis auf Höhe einer darunter angeordneten Entstapelungsvorrichtung (250) transportierbar ist;
b) Ein zur Entstapelungsvorrichtung (250) gehörender Aufnahmesupport (251a) ist von einer Betriebsposition ausgehend in vertikaler oder quasi-vertikaler Richtung auf die Transporteinrichtung (203) zuführbar, bis jene Stelle erreichbar ist, bei welcher eine Übergabe des Stapels (201) von der Entstapelungsvorrichtung zum Aufnahmesupport (251a) durchführbar ist;
c) Der Aufnahmesupport mit dem übernommenen Stapel fährt wieder an seine Betriebsposition zurück, in welcher der Entstapelungsvorgang (250b) einleitbar ist;
d) Zwischenzeitlich fährt die Transporteinrichtung zu ihrer Ausgangsposition zur Übernahme eines nachgelieferten Stapels (201a) zurück;
e) Bei dieser Betriebsposition greift mindestens ein kraftwirkendes Element (270) ein, durch welches eine auf das unterste Druckprodukt (C) ausübende Vakuumkraft (280) erzeugbar ist, wobei diese Kraft bei Weiterbeförderung des Druckprodukts intermittierend ausschaltbar ist, um beim nächsten nachgerückten Druckprodukt (D, E) temporär wieder einschaltet;
f) Das unterste Druckprodukt (C) ist unterhalb des kraftwirkenden Elements (270) einem dort betreibbaren Förderband zuleitbar, und das Druckprodukt ist unter Zuhilfenahme einer in Wirkverbindung mit dem Förderband betreibbaren Mitnehmerfingerkette (259) weitertransportierbar;
g) Die restlichen Druckprodukte (D, E) sind unter intermittierender Ausschaltung des kraftwirkenden Elements (270) sukzessiv freisetzbar, und sie sind dann einzeln in selber Manier weitertransportierbar.

13. Vorrichtung nach Anspruch 12, **dadurch gekennzeichnet, dass** eine Lichtschranke oder ein Sensor im Bereich der Transporteinrichtung die Stapelbreite und/oder die Breite der einzelnen Druckprodukte detektiert und diese Informationen an die Entstapelungsvorrichtung weitergeleitet werden.

14. Vorrichtung nach Anspruch 12, **dadurch gekennzeichnet, dass** das kraftwirksame Element durch eine Vakuumplatte (270) gebildet ist, durch welche eine Vakuumkraft erzeugbar ist, durch welche eine Haltekraft auf das unmittelbar erfasste Druckprodukt ausübbar ist.

15. Vorrichtung nach Anspruch 14, **dadurch gekennzeichnet, dass** die Vakuumplatte (270) eine bombierte Form aufweist, durch welche ein maximiertes Losbrechverhalten und eine höhere Stabilität auf das Druckprodukt erzeugbar sind.

16. Vorrichtung nach Anspruch 14, **dadurch gekennzeichnet, dass** die Vakuumplatte (270) mit einem verstellbaren Rückhalter (273) in Wirkverbindung steht.

17. Vorrichtung nach Anspruch 16, **dadurch gekennzeichnet, dass** das endseitige Ende des Rückhalters (273) mindestens auf Seite der zu entstapelnden Druckprodukte (C, D, E) mit einer Fase (276) versehen ist, deren unterste Kante tiefer oder höher gegenüber der Dicke des zur Entstapelung anstehenden Druckprodukts einstellbar ist.

18. Vorrichtung nach Anspruch 12, **dadurch gekennzeichnet, dass** der Aufnahmesupport (251a) mit Bezug auf den Entstapelungsvorgang (250b) mit einem Rüttler (274) versehen ist.

19. Vorrichtung nach Anspruch 12, **dadurch gekennzeichnet, dass** der Aufnahmesupport (251a) mit einem Leser (279) zum Detektieren der Druckproduktdicken ausgerüstet ist.

20. Vorrichtung nach Anspruch 12, **dadurch gekennzeichnet, dass** die ausübende Vakuumkraft auf die Vakuumplatte (270) durch ein Speisungselement (280) im Aufnahmesupport (251a) betreibbar ist.

21. Vorrichtung nach Anspruch 12, **dadurch gekennzeichnet, dass** das endseitige Ende eines zum Aufnahmesupport (251a) gehörenden Rückhalters (273) mindestens auf Seite der zu entstapelnden Druckprodukte (C, D, E) eine Fase (276) aufweist, deren unterste Kante tiefer oder höher gegenüber der Dicke des zur Entstapelung anstehenden Druckprodukts einstellbar ist, dergestalt, dass durch diese Einstellungen folgende Betriebszustände umsetzbar sind:
a) Ist die Fase (276) des Rückhalters (273) tiefer als die Druckproduktdicke i positioniert, ist die Weiterbeförderung des zu entstapelnden Druckprodukts (201, 201a) wegen der implementierten reduzierten Durchführungsöffnung gehemmt durchführbar;
b) Ist die Fase (276) des Rückhalters (273) höher als die Druckproduktdicke i positioniert, ist die Weiterbeförderung des zu entstapelnden Druckprodukts frei durchführbar;
c) Bei Betriebszustand b) ist der Rückhalter (273), zur Hinderung eines Nachrutschens eines anstehenden dünnen Drückprodukts sowie zum Auffangen der Dickenvariabilität der Druckprodukte, mit mindestens einer Durchflussöffnung (277a, 277b) versehen, durch welche Luft (278a, 278b) zur Entlastung und/oder Freisetzung des Stapels einströmbar ist.
